# EUROPEAN PATENT SPECIFICATION

(11) **EP 3 030 036 B1**
(45) Date of publication and mention of the grant of the patent: **10.07.2019**
(21) Application number: 14792114.2
(22) Date of filing: 23.04.2014
(51) Int. Cl.: H04W 76/12, H04W 92/20

(54) **METHODS, DEVICES AND SYSTEM FOR ESTABLISHING CONNECTION**
VERBINDUNGSAUFBAUVERFAHREN, -VORRICHTUNGEN UND -SYSTEM
PROCÉDÉS, DISPOSITIFS ET SYSTÈME POUR ÉTABLIR UNE CONNEXION

(30) Priority: 25.09.2013 CN 201310442053
(43) Date of publication of application: 08.06.2016
(73) Proprietor: ZTE Corporation, Shenzhen, Guangdong 518057 (CN)
(72) Inventor: GAO, Yin, Shenzhen Guangdong 518057 (CN); WU, Yunlu, Shenzhen Guangdong 518057 (CN); HUANG, Ying, Shenzhen Guangdong 518057 (CN)
(74) Representative: Brevalex
(86) International application number: PCT/CN2014/076016
(87) International publication number: WO 2014/177004

(56) References cited:
- EP-A1- 2 337 402
- CN-A- 101 730 305
- CN-A- 101 754 116
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 11)", 3GPP DRAFT; 36300-B50, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 15 March 2013 (2013-03-15), XP050698891, Retrieved from the Internet: URL:http://www.3gpp.org/ftp/tsg_ran/WG2_RL 2/Specifications/201303_final_specs_after_ RAN_59/ [retrieved on 2013-03-15]

## Description

### TECHNICAL FIELD

The disclosure relates to the field of communication, and in particular to a method, device, and system for establishing a connection.

### BACKGROUND

A home eNB (HeNB) is defined in a Long Term Evolution (LTE) system by the third Generation Partnership Projects (3GPP) standard organization. In LTE release R10, there is only a direct interface X2 between two HeNBs, while no interface X2 is supported between a Macro Evolved NodeB (eNB) and an HeNB. In LTE R11, an X2 gateway (GW) is introduced. The X2 GW, like an HeNB GW, is an optional deployment. Between an eNB and an HeNB and/or between two HeNBs, a proxy interface X2 may be established via an X2 GW, or a direct interface X2 may be established directly via no X2 GW. An interface X2 established directly between an HeNB and a neighboring eNB is referred to as a direct X2 connection between the HeNB and the neighboring eNB. An interface X2 between an X2 GW and the neighboring eNB established via an X2 GW is referred to as an indirect X2 connection.

At present, an eNB may discover a cell managed by a neighboring eNB using an Automatic Neighbor Relation (ANR) and establish an X2 connection with the neighboring eNB. After a user equipment (UE) camping on a cell managed by the eNB has measured a strong signal from a neighboring cell, the UE may send a measurement report to the eNB. Having acquired the measurement report for the neighboring cell, the eNB may determine, according to the measurement report, whether the neighboring cell is a Macro cell or an HeNB cell, acquire an eNB ID of an eNB managing the neighboring cell and a Tracking Area Indicator (TAI) (PLMN ID + Tracking Area Code, TAC) of the neighboring cell, and then initiate a process of discovering a Transport Network Layer (TNL) address to acquire a TNL address for establishing an X2 connection to the neighboring HeNB cell.

However, during the connection establishment, there is no way for deciding a direct or indirect X2 connection mode between the eNBs via the TNL address discovering flow, failing to effectively enhance network performance.

EP2337402 A1 discloses obtaining an X2 interface transmission address of a base station in an LTE system, where a base station obtains, using a constructed independent message through an S1 interface, a base station transmission address required for establishing an X2 interface connection, thus establishing the X2 interface connection between the base stations. A source base station can obtain a time transmission address of a target base station with which the source base station is to establish an X2 interface, so that the X2 interface can be established between the base stations.

"3rd Generation Partnership Project; Technical Specification Group Radio Access Network; Evolved Universal Terrestrial Radio Access (EUTRA) and Evolved Universal Terrestrial Radio Access Network (EUTRAN); Overall description; Stage 2 (Release 11)", 3GPP DRAFT; 36300-B50 (2013-3), XP050698891 provides an overall description of the E-UTRAN radio interface protocol architecture, including support of HeNBs, S1 and X2 interfaces.

CN101730305 A discloses informing a base station transport address in an LTE system, where a source base station initiates an S1 interface establishing request to an MME; the MME determines information on a base station associated with an X2 interface with the source base station and sends the source base station an S1 interface establishing response carrying information on a transport address of the base station associated with the X2 interface with the source base station.

### SUMMARY

The invention is carried out according to the appended independent claims. Optional features of the invention are carried out according to the dependent claims.

### BRIEF DESCRIPTION OF THE DRAWINGS

Fig.1 is a flowchart of a method for establishing a connection at a source-eNB side according to an Embodiment 1 herein.
Fig.2 is a flowchart of a method for establishing a connection at a target-eNB side according to an Embodiment 2 herein.
Fig.3 is aflowchart of a method for establishing a connection according to an Example 1 herein.
Fig.4 is a flowchart of the method according to an Example 2 herein.
Fig.5 is a flowchart of the method according to an Example 3 herein.
Fig.6 is a diagram of a structure of an eNB according to an Embodiment 3 herein.
Fig.7 is a diagram of a structure of a system for establishing a connection according to an Embodiment 4 herein.
Fig.8 is HeNB network architecture under independent X2 GW deployment.

### DETAILED DESCRIPTION

According to an embodiment herein, a source eNB sends, via an interface S1, a request for a transport address of an opposite end; receives a response to the request for the transport address; and initiates, according to the response, a flow of establishing an interface X2 to a target eNB.

The disclosure is further elaborated below with reference to the drawings and embodiments.

### Embodiment 1

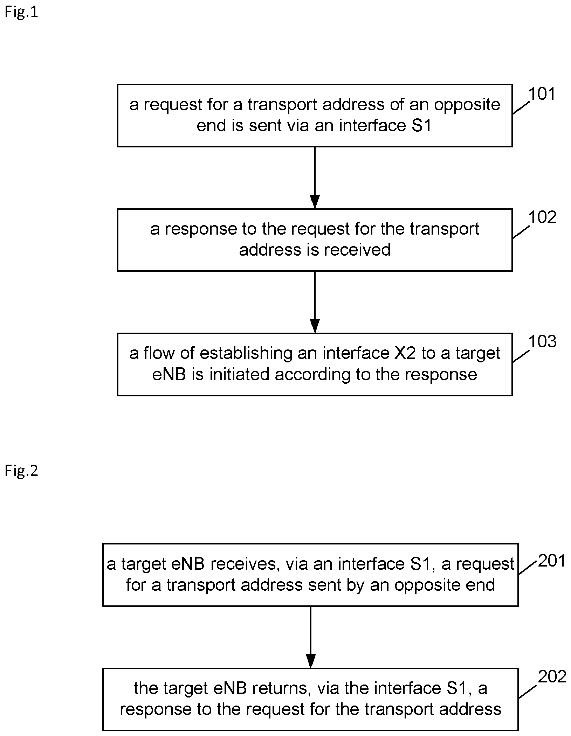

As shown in Fig.1, according to an embodiment herein, a flow of a method for establishing a connection at a source-eNB side includes steps as follows.

In step 101, a source eNB sends, via an interface S1, a request for a transport address of an opposite end.

Here, the request for the transport address of the opposite end may be sent via a local configuration transport message.

The request for the transport address of the opposite end may include information on the target eNB. The information on the target eNB may be an identifier of the target eNB.

The request for the transport address of the opposite end may include information on a type of the interface X2 to be established with the target eNB set by the source eNB.

The request for the transport address of the opposite end may include information on an IP address of the source eNB for establishing the interface X2.

The request for the transport address of the opposite end may include a request for an indicator of the type of the interface X2 to be established between the target eNB and the source eNB.

The type of the interface X2 may include a direct X2 connection or an indirect X2 connection.

The information on the IP address of the source eNB for establishing the interface X2 may contain: information on one or more TNL addresses, such as when the source eNB is configured with information on an IP address of an X2 GW connected to the source eNB for establishing the interface X2.

When the source eNB is configured to be connected to multiple X2 GWs, the information on the IP address of the source eNB for establishing the interface X2 may contain information on IP addresses of the multiple X2 GWs for establishing the interface X2. Alternatively, the request for the transport address of the opposite end may include a request for an indicator of the type of the interface X2 to be established between the target eNB and the source eNB.

In step 102, the source eNB receives a response to the request for the transport address.

Here, the response includes information on a Transport Network Layer, TNL, address of the target eNB for establishing the interface X2.

The response may include information on a type of the interface X2 to be established with the source eNB set by the target eNB.

When the target eNB is configured with the information on the IP address of an X2 GW connected to the target eNB for establishing the interface X2, the response includes information on a TNL address of the X2 GW connected to the target eNB for establishing the interface X2.

The type of the interface X2 may include a direct X2 connection or an indirect X2 connection.

In step 103, the source eNB initiates, according to the response, a flow of establishing an interface X2 to a target eNB.

The source eNB may determine a type of the interface X2 according to information on the type of the interface X2 between the target eNB and the source eNB, and information on a TNL address of an X2 GW for establishing the interface X2, and/or information on a TNL address for establishing the interface X2 included in the response; and initiate the flow of establishing the interface X2 to the target eNB.

Before step 103 is executed, the source eNB determines according to the information on the TNL address of the X2 GW connected to the target eNB for establishing the interface X2, whether the interface X2 with the target eNB can be established via an X2 GW connected to the source eNB.

The information on the TNL address of the X2 GW connected to the target eNB for establishing the interface X2 may be generated as follows. The target eNB may determine, according to the included information on the TNL address of the X2 GW for establishing the interface X2, whether it is possible to establish the interface X2 with the source eNB via the X2 GW connected to the target eNB, and generate a result of the determination as the information on the TNL address of the X2 GW connected to the target eNB for establishing the interface X2.

The source eNB may be an HeNB or a Macro eNB. When the source eNB is an HeNB connected to an HeNB GW, a message sent by the interface S1 has to be sent to the HeNB GW by the source eNB, and transferred transparently by the HeNB GW to the target eNB. Alternatively, a message sent by the interface S1 has to be transferred transparently by the HeNB GW to a core network, and forwarded by the core network to the target eNB. The core network may include a Mobility Management Entity (MME).

### Embodiment 2

As shown in Fig.2, according to an embodiment herein, a flow of a method for establishing a connection at a target-eNB side includes steps as follows.

In step 201, a target eNB receives, via an interface S1, a request for a transport address sent by an opposite end.

In step 202, the target eNB returns, via the interface S1, a response to the request for the transport address.

After receiving the request for the transport address of the opposite end, the target eNB may determine whether a response succeeds, and if so, return a successful response; otherwise return a failed response.

Here, the response includes information on one or more IP addresses of the target eNB for establishing the interface X2.

The successful response may include information on a type of the interface X2 to be established with the source eNB. When the target eNB is configured with information on an IP address of an X2 GW connected to the target eNB for establishing the interface X2, the successful response includes information on one or more IP addresses of X2 GW connected to the target eNB for establishing the interface X2.

The interface X2 to be established with the source eNB may be of a direct X2 connection or an indirect X2 connection.

When the target eNB is an HeNB connected to an HeNB GW, a message sent by the interface S1 has to be transferred transparently and forwarded via the HeNB GW connected to the target eNB. When the source eNB, also like the target eNB, is an HeNB connected to an HeNB GW, processing thereof may be the same.

The target eNB may determine whether the response succeeds as follows. When a decision of the target eNB on the type of the interface X2 is inconsistent with that of the source eNB included in the request for the transport address, the target eNB may determine that the response fails. The target eNB may include, in the failed response, an indicator indicating an interface X2 type refusal.

The target eNB may decide, according to information on a type of an interface X2 included in the request for the transport address as well as information on a type of the interface X2 to be established between the target eNB and a source eNB set by the target eNB, to establish a direct interface X2 or an indirect interface X2 between the target eNB and the source eNB. The target eNB may then initiate, according to the decision, a flow of establishing the interface X2 to the source eNB. the flow of establishing the interface X2 is known and thus is not repeated here.

The target eNB may be a Macro eNB or an HeNB.

### Example 1

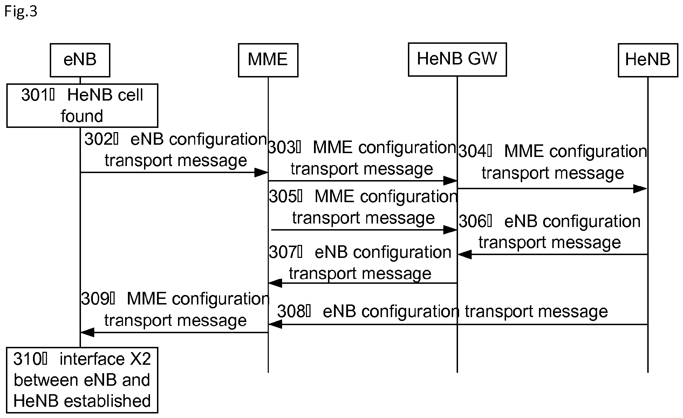

As shown in Fig. 3 assuming that the eNB is the source eNB and the HeNB is the target eNB, a method for establishing a connection may include steps as follows.

In step 301, when a UE managed by the eNB detects a cell managed by the HeNB, the UE may notify the eNB that an X2 connection has to be established with the HeNB.

In step 302, the eNB may send, via a local eNB configuration transport message, the MME a request for a transport address of an opposite end.

The request for the transport address of the opposite end may contain: information on the target HeNB, information on a type of the interface X2 to be established with the target HeNB set by the eNB. The type of the interface X2 may denote a direct X2 connection or an indirect X2 connection between the source eNB and the target eNB. The information on the type may be a 1-bit indicator of, for example, 0, denoting the direct X2 connection, or 1, denoting the indirect X2 connection.

The request for the transport address of the opposite end may further include: information on one or more IP addresses of the eNB for establishing the interface X2, and/or information on one or more IP addresses of X2 GW connected to the eNB for establishing the interface X2;

With the information on one or more IP addresses of X2 GW connected to the eNB for establishing the interface X2, the HeNB may determine whether the interface X2 with the eNB can be established via an X2 GW connected to the HeNB.

In step 303, the MME may determine whether the target HeNB is connected to the HeNB GW; when the target HeNB is connected to the HeNB GW, the MME may send, via a local MME configuration transport message, the HeNB GW the request for the transport address of the opposite end; the flow then goes to step 304; when the target HeNB is not connected to the HeNB GW, the flow goes to step 305.

In step 304, the HeNB GW may deliver the request for the transport address of the opposite end to the HeNB; and the flow goes to step 306.

In step 305, the MME may send, via a local MME configuration transport message, the HeNB the request for the transport address of the opposite end.

In step 306, after receiving the request for the transport address of the opposite end, when being connected to the HeNB GW, the HeNB may construct a response to send information on a TNL address of the HeNB for establishing the interface X2 to the HeNB GW, and the flow goes to step 307; otherwise the flow goes to step 308.

The response may include information on one or more IP addresses of the target HeNB for establishing the interface X2.

The response may further include information on a type of the interface X2 to be established with the source eNB set by the target HeNB, and/or information on one or more IP addresses of X2 GW connected to the HeNB for establishing the interface X2.

In step 307, the HeNB GW may transfer the response transparently to the MME; and the flow goes to step 309.

In step 308, the HeNB may construct a response to send information on a TNL address of the HeNB for establishing the interface X2 to the MME.

In step 309, the MME may deliver the response to the eNB via an MME configuration transport message.

In step 310, the eNB may establish the X2 connection according to the information on the TNL address of the HeNB for establishing the interface X2 included in the response, and/or the information on a TNL address of an X2 GW for establishing the interface X2, and the information on the type of the interface X2 between the target HeNB and the eNB.

When an eNB is configured to be connected to multiple X2 GWs, the request and the response may contain information on IP addresses of the multiple X2 GWs for establishing the interface X2.

When a decision of the target eNB on the type of the interface X2 is inconsistent with that of the source eNB included in the request for the transport address, the target eNB may include, in the response, an indicator such as indicating an interface X2 type acceptance or refusal.

The source eNB may include, in the request, a request for an indicator of the type of the interface X2 to be established between the target eNB and the source eNB, such as a request for an interface X2 type indicator. The target eNB may include, in the response, according to the indicator, information on the type of the interface X2 to be established between the target eNB and the source eNB.

### Example 2

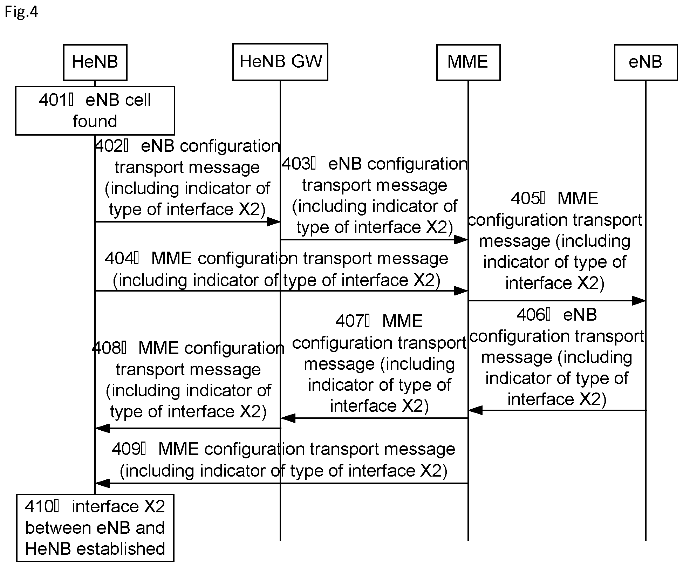

As shown in Fig. 4 assuming that the HeNB is the source eNB and the eNB is the target eNB, a method for establishing a connection may include steps as follows.

In step 401, a UE managed by the HeNB may detect a cell managed by the eNB, and may have to establish an X2 connection with the eNB; when the HeNB is connected to the HeNB GW, the flow may go to step 402; otherwise when the HeNB is not connected to the HeNB GW, the flow may go to step 404.

In step 402, the HeNB may send the HeNB GW an eNB configuration transport message to send a request for a transport address of an opposite end.

The request for the transport address of the opposite end may contain information on the target eNB, and information on a type of the interface X2 to be established with the target eNB set by the HeNB. The type of the interface X2 may denote a direct X2 connection or an indirect X2 connection between the source eNB and the target eNB. The information on the type may be a 1-bit indicator of, for example, 0, denoting the direct X2 connection, or 1, denoting the indirect X2 connection.

The request for the transport address of the opposite end may include: information on an IP address of the source HeNB for establishing the interface X2 (including information on one or more TNL addresses), information on an IP address of an X2 GW connected to the source HeNB for establishing the interface X2 (including information on one or more TNL addresses). With the information on the IP address of the X2 GW for establishing the interface X2 included therein, the eNB may establish the interface X2 with the X2 GW.

In step 403, the HeNB GW may deliver the request for the transport address of the opposite end to the MME via an eNB configuration transport message, and the flow may go to step 405.

In step 404, the HeNB may send the MME an eNB configuration transport message to send a request for a transport address of an opposite end.

The request may contain information on the target eNB, and information on a type of the interface X2 to be established with the target eNB set by the HeNB. The type of the interface X2 may denote a direct X2 connection or an indirect X2 connection between the source eNB and the target eNB. The information on the type may be a 1-bit indicator of, for example, 0, denoting the direct X2 connection, or 1, denoting the indirect X2 connection. The request may optionally include: information on an IP address of the source HeNB for establishing the interface X2 (including information on one or more TNL addresses). The request may optionally include information on an IP address of an X2 GW connected to the source HeNB for establishing the interface X2 (including information on one or more TNL addresses), when the source HeNB is configured with such information. With the information on the IP address of the X2 GW for establishing the interface X2 included therein, the eNB may establish the interface X2 with the X2 GW.

In step 405, the MME may forward the request to the target eNB according to the information on the target eNB included in the request.

In step 406, after receiving the MME configuration transport message, the eNB may construct an eNB configuration message to send information on a TNL address of the eNB for establishing the interface X2 to the MME.

The response may include information on an IP address of the target eNB for establishing the interface X2 (including information on one or more TNL addresses).

Optionally, the response may include information on a type of the interface X2 to be established with the source HeNB set by the target eNB. The type of the interface X2 may denote a direct X2 connection or an indirect X2 connection between the eNB and the HeNB is to be adopted. The information on the type may be a 1-bit indicator of, for example, 0, denoting the direct X2 connection, or 1, denoting the indirect X2 connection. The response to the request may optionally include information on an IP address of an X2 GW connected to the eNB for establishing the interface X2 (including information on one or more TNL addresses), when the eNB is configured with such information. With the information on the IP address of the X2 GW for establishing the interface X2 included therein, the HeNB may determine whether the interface X2 with the eNB can be established via an X2 GW connected to the HeNB.

In step 407, the MME may parse the received eNB configuration transport message; when the target HeNB is connected to the HeNB GW, the MME may transfer the eNB configuration transport message transparently to the HeNB GW, and the flow may go to step 408; otherwise when the target HeNB is not connected to the HeNB GW, the flow may go to step 409.

In step 408, the HeNB GW may forward the eNB configuration transport message to the HeNB, and the flow may go to step 410.

In step 409, the MME may deliver the response to the HeNB via an MME configuration transport message.

In step 410, the HeNB may establish the X2 connection between the source HeNB and the target eNB according to the information on the TNL address of the HeNB for establishing the interface X2 included in the response, and/or possibly the information on a TNL address of an X2 GW for establishing the interface X2, and the information on the type of the interface X2 between the target eNB and the HeNB.

When an eNB is configured to be connected to multiple X2 GWs, the request and the response may contain information on IP addresses of the multiple X2 GWs for establishing the interface X2.

When a decision of the target eNB on the type of the interface X2 is inconsistent with that of the source eNB included in the request for the transport address, the target eNB may include, in the response, an indicator such as indicating an interface X2 type acceptance or refusal.

The source eNB may include, in the request, a request for an indicator of the type of the interface X2 to be established between the target eNB and the source eNB, such as a request for an interface X2 type indicator. The target eNB may include, in the response, according to the indicator, information on the type of the interface X2 to be established between the target eNB and the source eNB.

### Example 3

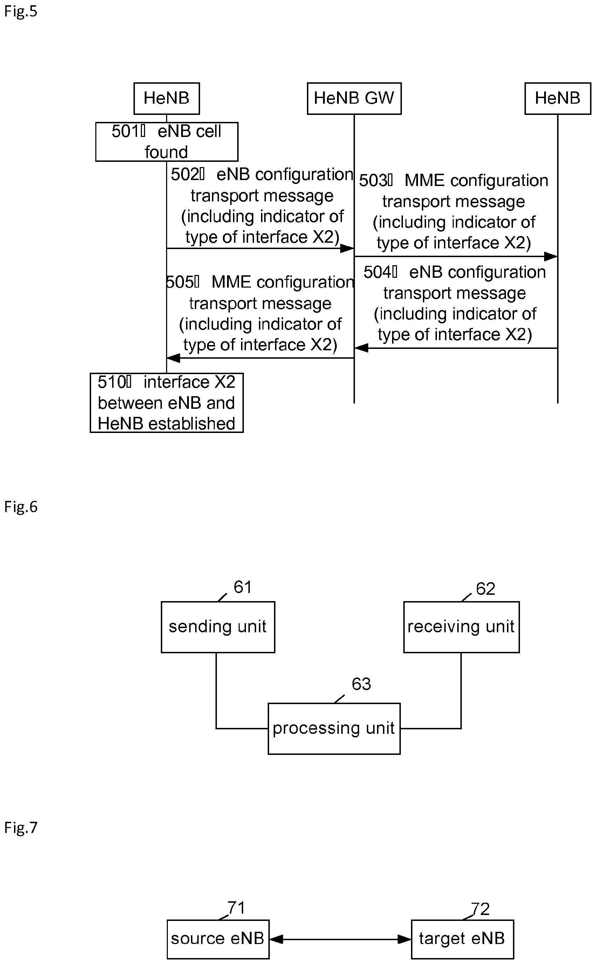

As shown in Fig.5 assuming that the HeNB1 is the source eNB and the HeNB2 is the target eNB, when the HeNB1 and the HeNB2 are connected to the same HeNB GW, a method for establishing a connection may include steps as follows.

In step 501, a UE managed by the HeNB1 may detect a cell managed by the HeNB2, and may have to establish an X2 connection with the HeNB2.

In step 502, the HeNB1 may send the HeNB GW an eNB configuration transport message requesting information on a TNL address of the target HeNB2 for establishing the interface X2.

The request may include information on the target HeNB2, and information on a type of the interface X2 to be established with the target HeNB2 set by the HeNB1. The type of the interface X2 may denote a direct X2 connection or an indirect X2 connection between the source eNB and the target eNB. The information on the type may be a 1-bit indicator of, for example, 0, denoting the direct X2 connection, or 1, denoting the indirect X2 connection. The request may optionally include information on an IP address of the source HeNB1 for establishing the interface X2 (including information on one or more TNL addresses). The request may optionally include information on an IP address of an X2 GW connected to the source HeNB1 for establishing the interface X2 (including information on one or more TNL addresses), when the source HeNB1 is configured with such information. With the information on the IP address of the X2 GW for establishing the interface X2 included therein, the HeNB2 may determine whether the interface X2 with the HeNB1 can be established via an X2 GW connected to the HeNB2.

In step 503, the HeNB GW may deliver the request to the HeNB2 via an MME configuration transport message.

In step 504, after receiving the MME configuration transport message, the HeNB2 may construct an eNB configuration message to send information on a TNL address of the HeNB2 for establishing the interface X2 to MME.

The response to the request may include information on an IP address of the target HeNB2 for establishing the interface X2 (including information on one or more TNL addresses). The response may optionally contain information on a type of the interface X2 to be established with the source HeNB1 set by the target HeNB2. The type of the interface X2 may denote a direct X2 connection or an indirect X2 connection between the HeNB1 and the HeNB2 to be adopted. The information on the type may be a 1-bit indicator of, for example, 0, denoting the direct X2 connection, or 1, denoting the indirect X2 connection. The response may optionally include information on an IP address of an X2 GW connected to the HeNB2 for establishing the interface X2 (including information on one or more TNL addresses), when the HeNB2 is configured with such information. With the information on the IP address of the X2 GW for establishing the interface X2 included therein, the HeNB1 may determine whether the interface X2 with the HeNB2 can be established via an X2 GW connected to the HeNB1.

In step 505, the HeNB GW may parse the received eNB configuration transport message and transfer the eNB configuration transport message transparently to the HeNB1.

In step 506, the HeNB1 may establish the X2 connection between the source HeNB1 and the target HeNB2 according to the information on the TNL address of the HeNB2 for establishing the interface X2 included therein, and/or possibly the information on a TNL address of an X2 GW for establishing the interface X2, and the information on the type of the interface X2 between the target HeNB2 and the HeNB1.

When an eNB is configured to be connected to multiple X2 GWs, the request and the response may contain information on IP addresses of the multiple X2 GWs for establishing the interface X2.

When a decision of the target eNB on the type of the interface X2 is inconsistent with that of the source eNB included in the request for the transport address, the target eNB may include, in the response, an indicator such as indicating an interface X2 type acceptance or refusal.

The source eNB may include, in the request, a request for an indicator of the type of the interface X2 to be established between the target eNB and the source eNB, such as a request for an interface X2 type indicator. The target eNB may include, in the response, according to the indicator, information on the type of the interface X2 to be established between the target eNB and the source eNB.

### Embodiment 3

As shown in Fig.6, the disclosure may further provide an eNB, including a sending unit 61, a receiving unit 62, and a processing unit 63.

The sending unit 61 is configured for: sending, via an interface S1, a request for a transport address of an opposite end.

The receiving unit 62 is configured for: receiving a response to the request for the transport address.

The processing unit 63 may be configured for: sending the request for the transport address to the sending unit 61, and deciding a type of an interface X2 according to the response received by the receiving unit 62.

The request for the transport address of the opposite end includes information on the target eNB.

The request for the transport address of the opposite end may include information on a type of the interface X2 to be established with the target eNB set by the source eNB. The type of the interface X2 may include a direct X2 connection or an indirect X2 connection.

The request for the transport address of the opposite end includes information on an IP address of the source eNB for establishing the interface X2.

The request for the transport address of the opposite end may include a request for an indicator of the type of the interface X2 to be established between the target eNB and the source eNB.

The response includes information on an IP address of the target eNB for establishing the interface X2.

The response may include information on a type of the interface X2 to be established with the source eNB set by the target eNB.

The response includes information on an IP address of an X2 GW connected to the target eNB for establishing the interface X2.

The type of the interface X2 may include a direct X2 connection or an indirect X2 connection.

The processing unit 63 may be configured for: determining a type of the interface X2 according to information on the type of the interface X2 between the target eNB and the source eNB, and information on a Transport Network Layer, TNL, address of an X2 GW for establishing the interface X2, and/or information on a TNL address for establishing the interface X2 included in the response.

The processing unit 63 is configured for: determining, according to the information on the TNL address of the X2 GW connected to the target eNB for establishing the interface X2, whether the interface X2 with the target eNB can be established via an X2 GW connected to the source eNB.

The information on the TNL address of the X2 GW connected to the target eNB for establishing the interface X2 may be generated as follows. The target eNB may determine, according to the included information on the TNL address of the X2 GW for establishing the interface X2, whether it is possible to establish the interface X2 with the source eNB via the X2 GW connected to the target eNB, and generate a result of the determination as the information on the TNL address of the X2 GW connected to the target eNB for establishing the interface X2.

Both the sending unit 61 and the receiving unit 62 may be implemented by hardware such as an antenna and a CPU, or an antenna and a DSP. The processing unit 63 may be implemented by hardware such as a DSP or a CPU.

### Embodiment 4

An eNB according to an embodiment herein may further serve as the target eNB, including a receiving unit and a sending unit.

The receiving unit is configured for: receiving, via an interface S1, a request for a transport address sent by an opposite end.

The sending unit is configured for: returning, via the interface S1, a response to the request for the transport address.

The response may include information on an IP address of the target eNB for establishing the interface X2.

The response may include information on a type of the interface X2 to be established with the source eNB set by the target eNB.

The response includes information on an IP address of an X2 GW connected to the target eNB for establishing the interface X2.

The type of the interface X2 may include a direct X2 connection or an indirect X2 connection.

The eNB may further include a processing unit configured for: deciding, according to information on a type of an interface X2 included in the request for the transport address received by the receiving unit as well as information on a type of the interface X2 to be established between the target eNB and a source eNB set by the target eNB, to establish a direct interface X2 or an indirect interface X2 between the target eNB and the source eNB, and initiating, according to the decision, a flow of establishing the interface X2 to the source eNB.

The eNB according to the embodiment may serve as the target eNB, with a structure as shown in Fig.6.

### Embodiment 5

As shown in Fig.7, a system herein include a source eNB 71 and a target eNB 72.

The source eNB 71 is configured for: sending, from a network side via an interface S1, a request for a transport address of an opposite end; receiving, from the network side, a response to the request for the transport address sent by the target eNB; and deciding a type of an interface X2 according to the response.

The target eNB 72 is configured for: receiving, from the network side via the interface S1, the request for the transport address sent by the source eNB; and returning, from the network side via the interface S1, the response to the request for the transport address.

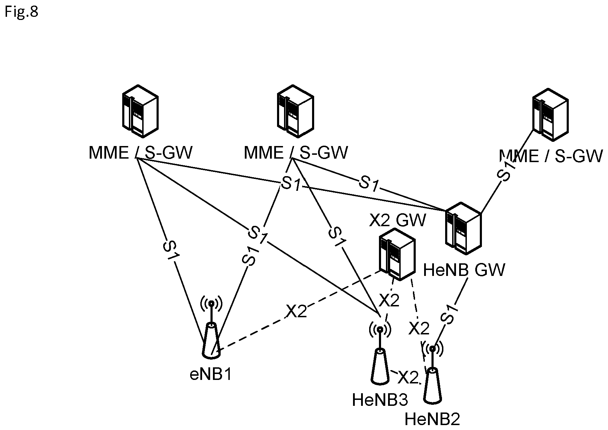

For example, as shown in Fig.8, a system according to an embodiment herein may be HeNB network architecture under independent X2 GW deployment.

What described are merely embodiments herein and are not intended for limiting the protection scope of the disclosure.

## Claims

1. A method for establishing a connection, **characterized in that** it comprises:
sending, by a source Evolved NodeB, eNB, via an interface S1, a request for a transport address of an opposite end (101);
receiving, by the source eNB, a response to the request for the transport address (102);
wherein the response comprises information on a Transport Network Layer, TNL, address of a target eNB (103) for establishing an interface X2,
wherein when the target eNB is configured with information on an IP address of an X2 GateWay, X2 GW, connected to the target eNB for establishing the interface X2, the response comprises information on a TNL address of the X2 GW connected to the target eNB for establishing the interface X2,
determining, by the source eNB, according to the information on the TNL address of the X2 GW connected to the target eNB for establishing the interface X2, whether the interface X2 with the target eNB can be established via an X2 GW connected to the source eNB; and
initiating, by the source eNB according to the response, a flow of establishing an interface X2 to a target eNB (103).

2. The method according to claim 1, wherein the request for the transport address of the opposite end comprises information on the target eNB.

3. A method for establishing a connection, **characterized in that** it comprises:
receiving, by a target Evolved NodeB, eNB, via an interface S1, a request for a transport address sent by an opposite end (201); and
returning, by the target eNB via the interface S1, a response to the request for the transport address (202),
wherein the response comprises information on a Transport Network Layer, TNL, address of the target eNB for establishing an interface X2,
wherein, when the target eNB is configured with information on an IP address of an X2 GateWay, X2 GW, connected to the target eNB for establishing the interface X2, the response comprises information on a TNL address of the X2 GW connected to the target eNB for establishing the interface X2,
such that the opposite end determines, according to the information on the TNL address of the X2 GW connected to the target eNB for establishing the interface X2, whether the interface X2 with the target eNB can be established via an X2 GW connected to the opposite end.

4. A source Evolved NodeB, eNB (71), **characterized in that** it comprises a sending unit (61), a receiving unit (62), and a processing unit (63),
wherein the sending unit (61) is configured for: sending, via an interface S1, a request for a transport address of an opposite end;
wherein the receiving unit (62) is configured for: receiving a response to the request for the transport address;
wherein the response comprises information on a Transport Network Layer, TNL, address of a target eNB for establishing an interface X2,
wherein, when the target eNB is configured with information on an IP address of an X2 GateWay, X2 GW, connected to the target eNB for establishing the interface X2, the response comprises information on a TNL address of the X2 GW connected to the target eNB for establishing the interface X2,
wherein the processing unit is configured for: determining, according to the information on the TNL address of the X2 GW connected to the target eNB for establishing the interface X2, whether the interface X2 with the target eNB can be established via an X2 GW connected to the source eNB, and for initiating, according to the response, a flow of establishing the interface X2 to the target eNB.

5. The eNB (71) according to claim 4, wherein the request for the transport address of the opposite end comprises information on the target eNB.

6. A target Evolved NodeB, eNB (72), **characterized in that** it comprises a receiving unit and a sending unit,
wherein the receiving unit is configured for: receiving, via an interface S1, a request for a transport address sent by an opposite end;
wherein the sending unit is configured for: returning, via the interface S1, a response to the request for the transport address
wherein the response comprises information on a Transport Network Layer, TNL, address of the target eNB for establishing an interface X2,
wherein when the target eNB is configured with information on an IP address of an X2 GateWay, X2 GW, connected to the target eNB for establishing the interface X2, the response comprises information on a TNL address of the X2 GW connected to the target eNB for establishing the interface X2,
such that the opposite end determines, according to the information on the TNL address of the X2 GW connected to the target eNB for establishing the interface X2, whether the interface X2 with the target eNB can be established via an X2 GW connected to the opposite end.

7. A system for establishing a connection, comprising a source Evolved NodeB, eNB (71), according to claim 4 and a target eNB (72) according to claim 6.

## Patentansprüche

1. Verfahren zum Herstellen einer Verbindung, **dadurch gekennzeichnet, dass** es umfasst:
Senden, durch einen Quelle-Evolved NodeB, -eNB, mittels einer Schnittstelle S1, einer Anfrage bezüglich einer Transportadresse eines entgegengesetzten Endes (101);
Empfangen, durch den Quelle-eNB, einer Antwort auf die Anfrage bezüglich der Transportadresse (102);
wobei die Antwort Informationen über eine Transportnetzwerkschicht-, TNL-, Adresse eines Ziel-eNB (103) zum Herstellen einer Schnittstelle X2 umfasst,
wobei, wenn der Ziel-eNB mit Informationen über eine IP-Adresse eines X2-GateWay, X2-GW, der mit dem Ziel-eNB zum Herstellen der Schnittstelle X2 verbunden ist, ausgebildet ist, die Antwort Informationen über eine TNL-Adresse des X2-GW, der mit dem Ziel-eNB zum Herstellen der Schnittstelle X2 verbunden ist, umfasst,
Bestimmen, durch den Quelle-eNB gemäß den Informationen über die TNL-Adresse des X2-GW, der mit dem Ziel-eNB zum Herstellen der Schnittstelle X2 verbunden ist, ob die Schnittstelle X2 mit dem Ziel-eNB mittels eines X2-GW hergestellt werden kann, der mit dem Quelle-eNB verbunden ist; und
Initiieren, durch den Quelle-eNB gemäß der Antwort, eines Flusses des Herstellens einer Schnittstelle X2 zu einem Ziel-eNB (103).

2. Verfahren nach Anspruch 1, bei dem die Anfrage für die Transportadresse des gegenüberliegenden Endes Informationen über den Ziel-eNB umfasst.

3. Verfahren zum Herstellen einer Verbindung, **dadurch gekennzeichnet, dass** es umfasst:
Empfangen, durch einen Ziel-Evolved NodeB, -eNB, mittels einer Schnittstelle S1, einer Anfrage bezüglich einer Transportadresse, die durch ein entgegengesetztes Ende gesendet wird (201);
Zurückführen, durch den Ziel-eNB mittels der Schnittstelle S1, einer Antwort auf die Anfrage bezüglich der Transportadresse (202),
wobei die Antwort Informationen über eine Transportnetzwerkschicht-, TNL-, Adresse des Ziel-eNB zum Herstellen einer Schnittstelle X2 umfasst,
wobei, wenn der Ziel-eNB mit Informationen über eine IP-Adresse eines X2-GateWay, X2-GW, der mit dem Ziel-eNB zum Herstellen der Schnittstelle X2 verbunden ist, ausgebildet ist, die Antwort Informationen über eine TNL-Adresse des X2-GW, der mit dem Ziel-eNB zum Herstellen der Schnittstelle X2 verbunden ist, umfasst,
so dass das entgegengesetzte Ende, gemäß den Informationen über die TNL-Adresse des X2-GW, der mit dem Ziel-eNB zum Herstellen der Schnittstelle X2 verbunden ist, bestimmt, ob die Schnittstelle X2 mit dem Ziel-eNB mittels eines X2-GW hergestellt werden kann, der mit dem entgegengesetzten Ende verbunden ist.

4. Quelle-Evolved NodeB, -eNB (71), **dadurch gekennzeichnet, dass** er eine Sendeinheit (61), eine Empfangseinheit (62) und eine Verarbeitungseinheit (63) umfasst,
wobei die Sendeeinheit (61) ausgebildet ist zum: Senden, mittels einer Schnittstelle S1, einer Anfrage bezüglich einer Transportadresse eines entgegengesetzten Endes;
wobei die Empfangseinheit (62) ausgebildet ist zum: Empfangen einer Antwort auf die Anfrage bezüglich der Transportadresse;
wobei die Antwort Informationen über eine Transportnetzwerkschicht-, TNL-, Adresse eines Ziel-eNB zum Herstellen einer Schnittstelle X2 umfasst,
wobei, wenn der Ziel-eNB mit Informationen über eine IP-Adresse eines X2-GateWay, X2-GW, der mit dem Ziel-eNB zum Herstellen der Schnittstelle X2 verbunden ist, ausgebildet ist, die Antwort Informationen über eine TNL-Adresse des X2-GW, der mit dem Ziel-eNB zum Herstellen der Schnittstelle X2 verbunden ist, umfasst,
wobei die Verarbeitungseinheit ausgebildet ist zum: Bestimmen, gemäß den Informationen über die TNL-Adresse des X2-GW, der mit dem Ziel-eNB zum Herstellen der Schnittstelle X2 verbunden ist, ob die Schnittstelle X2 mit dem Ziel-eNB mittels eines X2-GW hergestellt werden kann, der mit dem Quelle-eNB verbunden ist; und zum Initiieren, gemäß der Antwort, eines Flusses des Herstellens der Schnittstelle X2 zu dem Ziel-eNB.

5. eNB (71) gemäß Anspruch 4, bei dem die Anfrage für die Transportadresse des gegenüberliegenden Endes Informationen über den Ziel-eNB umfasst.

6. Ziel-Evolved NodeB, -eNB (72), **dadurch gekennzeichnet, dass** er eine Empfangseinheit und eine Sendeinheit umfasst,
wobei die Empfangseinheit ausgebildet ist zum: Empfangen, mittels einer Schnittstelle S1, einer Anfrage bezüglich einer Transportadresse, die durch ein entgegengesetztes Ende gesendet wird;
wobei die Sendeeinheit ausgebildet ist zum: Zurückführen, mittels der Schnittstelle S1, einer Antwort auf die Anfrage bezüglich der Transportadresse;
wobei die Antwort Informationen über eine Transportnetzwerkschicht-, TNL-, Adresse des Ziel-eNB zum Herstellen einer Schnittstelle X2 umfasst,
wobei, wenn der Ziel-eNB mit Informationen über eine IP-Adresse eines X2-GateWay, X2-GW, der mit dem Ziel-eNB zum Herstellen der Schnittstelle X2 verbunden ist, ausgebildet ist, die Antwort Informationen über eine TNL-Adresse des X2-GW, der mit dem Ziel-eNB zum Herstellen der Schnittstelle X2 verbunden ist, umfasst,
so dass das entgegengesetzte Ende, gemäß den Informationen über die TNL-Adresse des X2-GW, der mit dem Ziel-eNB zum Herstellen der Schnittstelle X2 verbunden ist, bestimmt, ob die Schnittstelle X2 mit dem Ziel-eNB mittels eines X2-GW hergestellt werden kann, der mit dem entgegengesetzten Ende verbunden ist.

7. System zum Herstellen einer Verbindung, umfassend einen Quelle-Evolved NodeB, -eNB (71), nach Anspruch 4 und einen Ziel-eNB (72) nach Anspruch 6.

## Revendications

1. Procédé pour établir une connexion, **caractérisé en ce qu'**il comprend :
l'envoi, par un noeud B évolué, eNB, source, via une interface S1, d'une demande d'une adresse de transport d'une extrémité opposée (101) ;
la réception, par l'eNB source, d'une réponse à la demande de l'adresse de transport (102) ;
dans lequel la réponse comprend des informations sur une adresse de couche de réseau de transport, TNL, d'un eNB cible (103) pour établir une interface X2,
dans lequel, lorsque l'eNB cible est configuré avec des informations sur une adresse IP d'une passerelle X2, GW X2, connectée à l'eNB cible pour établir l'interface X2, la réponse comprend des informations sur une adresse TNL de la GW X2 connectée à l'eNB cible pour établir l'interface X2,
le fait de déterminer, par l'eNB source, selon les informations sur l'adresse TNL de la GW X2 connectée à l'eNB cible pour établir l'interface X2, si l'interface X2 avec l'eNB cible peut être établie via une GW X2 connectée à l'eNB source ; et
le lancement, par l'eNB source selon la réponse, d'un flux d'établissement d'une interface X2 à un eNB cible (103).

2. Procédé selon la revendication 1, dans lequel la demande de l'adresse de transport de l'extrémité opposée comprend des informations sur l'eNB cible.

3. Procédé pour établir une connexion, **caractérisé en ce qu'**il comprend :
la réception, par un noeud B évolué, eNB, cible, via une interface S1, d'une demande d'une adresse de transport envoyée par une extrémité opposée (201) ; et
le renvoi, par l'eNB cible via l'interface S1, d'une réponse à la demande de l'adresse de transport (202),
dans lequel la réponse comprend des informations sur une adresse de couche de réseau de transport, TNL, de l'eNB cible pour établir une interface X2,
dans lequel, lorsque l'eNB cible est configuré avec des informations sur une adresse IP d'une passerelle X2, GW X2, connectée à l'eNB cible pour établir l'interface X2, la réponse comprend des informations sur une adresse TNL de la GW X2 connectée à l'eNB cible pour établir l'interface X2,
de sorte que l'extrémité opposée détermine, selon les informations sur l'adresse TNL de la GW X2 connectée à l'eNB cible pour établir l'interface X2, si l'interface X2 avec l'eNB cible peut être établie via une GW X2 connectée à l'extrémité opposée.

4. Noeud B évolué, eNB, source (71), **caractérisé en ce qu'**il comprend une unité d'envoi (61), une unité de réception (62) et une unité de traitement (63),
dans lequel l'unité d'envoi (61) est configurée pour : envoyer, via une interface S1, une demande d'une adresse de transport d'une extrémité opposée ;
dans lequel l'unité de réception (62) est configurée pour : recevoir une réponse à la demande de l'adresse de transport ;
dans lequel la réponse comprend des informations sur une adresse de couche de réseau de transport, TNL, d'un eNB cible pour établir une interface X2,
dans lequel, lorsque l'eNB cible est configuré avec des informations sur une adresse IP d'une passerelle X2, GW X2, connectée à l'eNB cible pour établir l'interface X2, la réponse comprend des informations sur une adresse TNL de la GW X2 connectée à l'eNB cible pour établir l'interface X2,
dans lequel l'unité de traitement est configurée pour : déterminer, selon les informations sur l'adresse TNL de la GW X2 connectée à l'eNB cible pour établir l'interface X2, si l'interface X2 avec l'eNB cible peut être établie via une GW X2 connectée à l'eNB source, et pour lancer, selon la réponse, un flux d'établissement de l'interface X2 à l'eNB cible.

5. eNB (71) selon la revendication 4, dans lequel la demande de l'adresse de transport de l'extrémité opposée comprend des informations sur l'eNB cible.

6. Noeud B évolué, eNB, cible (72), **caractérisé en ce qu'**il comprend une unité de réception et une unité d'envoi,
dans lequel l'unité de réception est configurée pour : recevoir, via une interface S1, une demande d'une adresse de transport envoyée par une extrémité opposée ;
dans lequel l'unité d'envoi est configurée pour : renvoyer, via l'interface S1, une réponse à la demande de l'adresse de transport
dans lequel la réponse comprend des informations sur une adresse de couche de réseau de transport, TNL, de l'eNB cible pour établir une interface X2,
dans lequel lorsque l'eNB cible est configuré avec des informations sur une adresse IP d'une passerelle X2, GW X2, connectée à l'eNB cible pour établir l'interface X2, la réponse comprend des informations sur une adresse TNL de la GW X2 connectée à l'eNB cible pour établir l'interface X2,
de sorte que l'extrémité opposée détermine, selon les informations sur l'adresse TNL de la GW X2 connectée à l'eNB cible pour établir l'interface X2, si l'interface X2 avec l'eNB cible peut être établie via une GW X2 connectée à l'extrémité opposée.

7. Système pour établir une connexion, comprenant un noeud B évolué, eNB, source (71), selon la revendication 4 et un eNB cible (72) selon la revendication 6.
